# EUROPEAN PATENT APPLICATION

(11) **EP 1 365 315 A2**
(43) Date of publication of application: **26.11.2003**
(21) Application number: 03250225.4
(22) Date of filing: 14.01.2003
(51) Int. Cl.: G06F 3/12

(54) **Information system for providing printing function, printing method and program**

(30) Priority: 20.05.2002 JP 2002144884
(71) Applicant: FUJITSU LIMITED, Kawasaki-shi, Kanagawa 211-8588 (JP)
(72) Inventor: Yamada, Akira, c/o Fujitsu Limited, Kawasaki-shi, Kanagawa 221-8588 (JP); Yamada, Akira, c/o Fujitsu Limited, Kawasaki-shi, Kanagawa 221-8588 (JP)
(74) Representative: Hitching, Peter Matthew

(57) **Abstract**

An information system has a user device (2) and a server (1). The user device includes a unit receiving a print request of print target information, and a unit transmitting a print command of the print target information to the server on a network. The server includes a unit receiving the print command of the print target information, a unit reserving the print command, a print data creation unit converting the print target information into a format possible of inputting to a printing device (4) and thus creating print data, and a unit transferring the print data to the printing device when a reservation of the print command is canceled.

## Description

The present invention relates to a printing process in an information system.

Most of information devices such as mobile phones, PDAs (Personal Digital Assistants) etc don't include a printing device or an interface for a connection to the printing device in terms of decreasing a weight thereof. Such an information device is provided with just a display unit having a smaller area than a personal computer etc in the great majority of cases. Accordingly, there arises a case of desiring to print the information displayed on the display unit in these information devices. Further, in these information devices, there is a case of desiring to display a piece of information but being unable to display it on the display unit, and often desiring to print such a piece of information.

A known technology contrived corresponding to such a problem is, for example, a printing method disclosed in Japanese Patent Application Laying-Open No.2001-260497. According to this printing method, a user installs the printing device in a device-operable place, and the printing device connects to a mobile electronic device incorporating no printing function through a communication path. The printing device communicates with the mobile electronic device in response to a print command given from an input device, and prints the information stored in this mobile electronic device or the information to which the same mobile electronic device refers. Based on this architecture, the printing method disclosed in the publication given above provide the printing function of printing the information stored in the mobile electronic device incorporating not printing function or the information to which this mobile electronic device refers.

The prior art described above did not, however, take into consideration a memory capacity etc of the mobile electronic device. Namely, according to the prior art, the print target information is defined as the information stored in the mobile electronic device or the information to which this mobile electronic device refers.

The storage of the information into the mobile electronic device involves directly using a memory of the mobile electronic device. Further, the information to which the mobile electronic device refers also needs to be retained in the memory of the mobile electronic device.

Those pieces of information must be retained in the mobile electronic device till the printing is completed, and this presses on a substantially insufficient memory capacity of the mobile electronic device. Therefore, according to the prior art, the user can do no more than printing the limited information by the printing device but can not print pieces of information collected by the mobile electronic device as the user intends.

Moreover, nowadays, the users utilize a multiplicity of information devices other than the mobile electronic devices, such as a set-top box for a cable TV, a tuner for receiving satellite broadcasts etc, but none of these information devices include a well-designed interface with the printing device. The prior art did not take into consideration a technology of printing the information displayed on the electronic device or the information to which the same device refers.

It is therefore desirable to provide a technology enabling a user, having an information device of which a printing function is not sufficient, to print information obtained from this information device as the user intends.

In one aspect of the present invention, an information system has a user device, and a server. The user device includes a unit accepting a print request of print target information, and a unit transmitting a print command of the print target information to the server on a network. The server includes a unit receiving the print command of the print target information, a holding unit holding the print command, a print data creation unit converting the print target information into a format possible of inputting to a printing device and thus creating print data, and a unit transferring the print data to the printing device when the holding status of the print command is released.

Herein, the user device is defined as, e.g., a device that provides an information display function to the user. The user, when desiring to print the information displayed on the user device, inputs a print request to the user device. A print command of printing the displayed information is thereby transmitted to the server from the user device.

The server, upon receiving the print command, does not immediately print the information but holds this print command. The hold implies recording the print target information or a location of the same information. The hold may also be called a print reservation. The server, when the holding status of the print command is released, has the information printed by the printing device.

Thus, according to this aspect of the present invention, the user is able to reserve a desired item of information for printing as the user intends and to store the same information on the server, and to make the printing device print it at a timing convenient to the user.

The print data creation unit converts the print target information into a format possible of inputting to the printing device. This conversion may be executed when receiving the print command described above. Further, the print data creation unit may create the print data when the holding status of the print command is released.

Preferably, the user device may further include a unit releasing status of the print command.

Preferably, the information system may further have a printing device connected to the server on the network, the user device may further includes a unit commanding the server to release the holding status via the printing device, and the printing device may receive from the server the print data after releasing the holding status and may print the print data.

According to another aspect of the present invention, a user device for making a printing device print information, has a unit accepting a print request of print target information, a unit sending a print command of the print target information to a server on a network, and having the print command held by the server, and a unit giving a command of releasing the holding status through a printing device connected to the server via the network, and having the print target information printed by the printing device.

According to still another aspect of the present invention, a server for holding print target information has a holding unit holding a print command of print target information, a unit reserving the print command, a unit converting the print target information into a format possible of inputting to a printing device, and thus creating print data, and a unit transferring the print data to the printing device when releasing the holding status of the print command.

Any one of the components of the present invention may be realized as a program or a data structure in a computer.

According to a further aspect of the present invention, there is provided a method by which a computer or other device or machine etc executes any one of the processes described above.

According to a still further aspect of the present invention, there is provided a program or a data structure for making a computer or other device or machine etc actualize any one of the above functions, steps or processes.

According to a yet further aspect of the present invention, there is provided a storage medium readable by a computer or other device or machine etc, this medium being recorded with the above program or data structure.

As described above , in an embodiment of the present invention, the information device of which a printing function is insufficient enables printing of the information obtained from the information device itself as a user intends.

Reference will now be made, by way of example, to the accompanying drawings, in which:
FIG. 1 is a diagram showing a system architecture of an information system in one embodiment of the present invention;
FIG. 2 is a view showing an external configuration of a mobile terminal 2;
FIG. 3 is a block diagram showing functions of a printer 4;
FIG. 4 is a diagram showing an example of a screen on the mobile terminal 2;
FIG. 5 is a diagram showing a format example of a print reserve command;
FIG. 6 is a format example of print reserve information;
FIG. 7 is a format example of a reserve database 11;
FIG. 8 is a format example of a print go command;
FIG. 9 is a format example of a print data request;
FIG. 10 is a format example of transmission data to the printer 4 from a print reserve server 1;
FIG. 11 is a flowchart showing a flow starting from a receipt of the print reserve command from the mobile terminal 2 to a print reserve process in the print reserve server 1; and
FIG. 12 is a flowchart showing a flow starting from a receipt of the print data request from the printer 4 to a print data transmission process in the print reserve server 1.

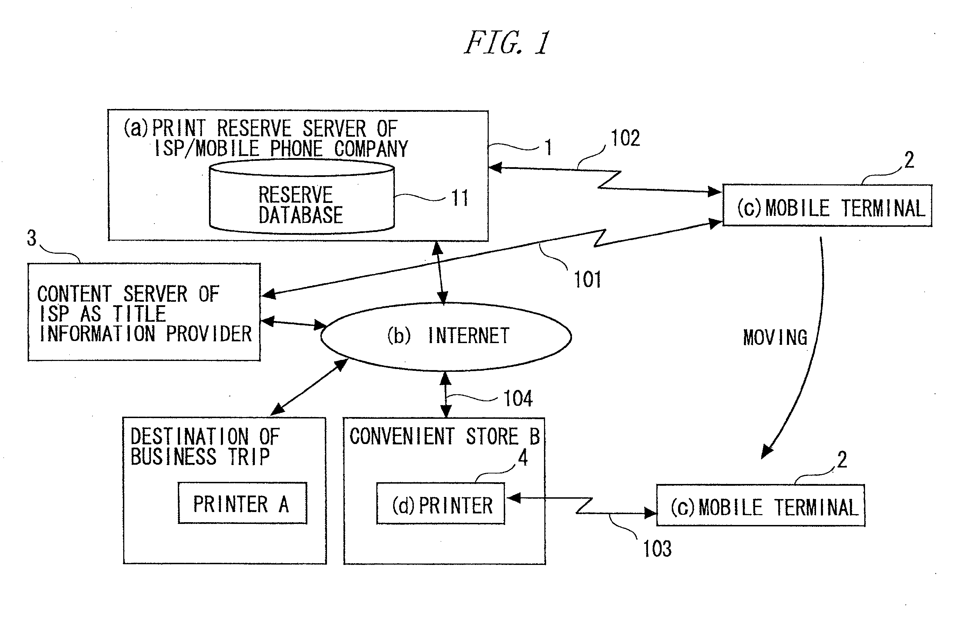

An embodiment of the present invention will hereinafter be described with reference to FIGS. 1 through 12.

### <System Architecture>

FIG. 1 is a diagram showing a system architecture of this information system. This information system is configured by connecting, through a network such as the Internet etc, a print reserve server 1 provided by an Internet service provider (which will hereinafter be abbreviated to ISP), a mobile phone company or a telephone company etc, a mobile terminal 2 utilized by a user, a content server 3 for providing the mobile terminal 2 with various categories of contents (that may also be called title information), and a printer 4 installed at a shop such as a convenience store etc, a variety of facilities or where the user goes to for a business trip and so on.

The mobile terminal 2 includes categories of a mobile phone, a PHS (Personal Handyphone System), a PDA etc. The user searches for information on the internet through the mobile terminal 2 (as indicated by an arrowhead 101). According to this embodiment, the mobile terminal 2 is given a [print reserve] function and a [print go] function. If there exists a want-to-print item of information among searched items of information, the user executes a printing process by performing the [print reserve] function and the [print go] function.

With this [print reserve], a command showing [print reserve] (which will hereinafter be called a print reserve command) and title information of a print reserve target, are sent to the print reserve server 1 (an arrowhead 102). The print reserve server 1 sets the received information (the print reserve command and the print reserve target title information) in a wait-for-print status, and saves the same information in a reserve database 11. This process is called a reservation of the print data. Note that the reservation of the print data is also called a hold of print in this embodiment.

In the case of printing the information, the user connects the mobile terminal 2 to the printer 4 on the Internet, displays the previously reserved print data from on the mobile phone 2, then specifies a desired item of print data, and issues a print go command.

Further, the user goes to, for instance, a nearby shop such as the convenience store etc, wherein the user may connect the mobile terminal 2 to the printer 4 installed at this shop and issue the print go command (an arrowhead 103).

The printer 4, upon receiving the print go command, releases the hold status of printing of the specified item of print data, and transmits a print data request command to the print reserve server 1. The print reserve server 1 receiving this command searches for the print target content on the basis of the information (that is the content specified by the print reserve command) saved in the reserve database 11. Then, the print reserve server 1 converts the searched content into a printable format of the printer 4 and transmits the same content to the printer 4. The printer 4 prints the print data received from the print reserve server 1.

Among the hardware components of the information system, the print reserve server 1 and the content server 3 are typical computers each incorporating a storage device for storing the data and a communication function with the network.

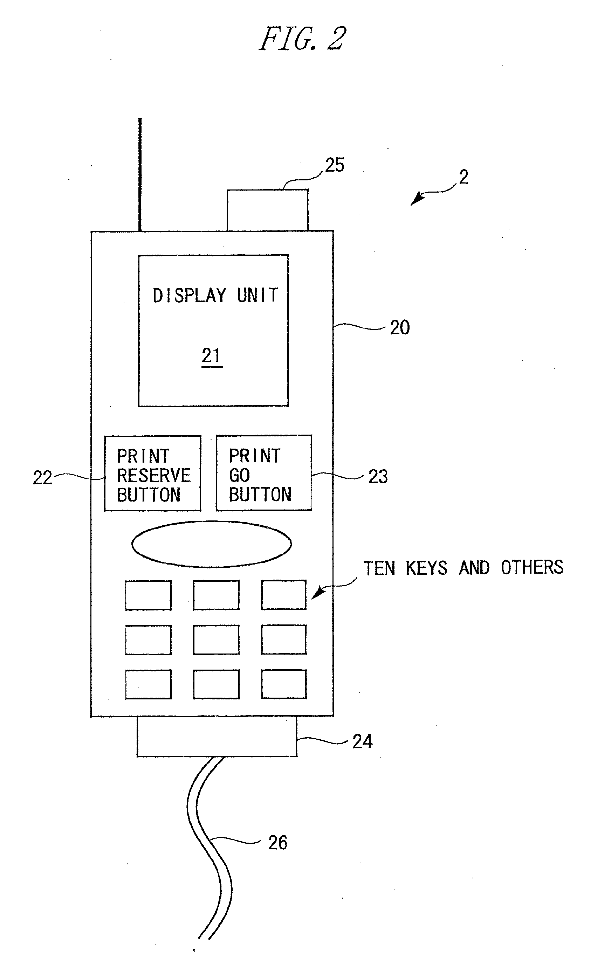

FIG. 2 is a view illustrating an external configuration of the mobile terminal 2. This mobile terminal 2 is constructed by incorporating a display unit 21, a [print reserve] button 22, a [print go] button 23, ten keys etc into a box body 20. Further, this mobile terminal 2 further includes a connector 24 for a mobile phone cable and a Bluetooth module 25.

A wired connection of the mobile terminal 2 to the printer 4 is attained by connecting a mobile phone cable connected to the printer 4 to the connector 24. The connector 24 may, however, be based on, e.g., the USB (Universal Serial Bus) standards or the IEEE-1394 standards.

Further, the mobile terminal 2 utilizes the Bluetooth module 25 in order to establish the connection with the printer 4 (having the Bluetooth module) provided within a predetermined distance in wireless communications based on the Bluetooth standards.

The display unit 21 is a liquid crystal display, an electro-luminescence panel etc, and displays various categories of menus icons or the title information on the Internet, and so forth.

The [print reserve] button 22 is a button capable of assigning an execution of a predetermined function and is therefore referred to as an assign button, assign key or programmable key. The user presses the [print reserve] button 22, whereby the print reserve command for reserving a print of the information displayed on the display unit 21 is transmitted to the print reserve server 1 shown in FIG. 1.

The [print go] button 23 is also classified as one of the assign buttons. In the case of executing the printing, the user at first connects the mobile terminal 2 to the printer 4. This connection may involve what is established via a telephone network and the Internet, or what is established through the wired communications using the connector 24 or wireless communications using the Bluetooth module 25 etc. In such a connected state, the user specifies the data reserved on the display unit 21 and presses the [print go] button 23, whereby the printer 4 prints the specified data.

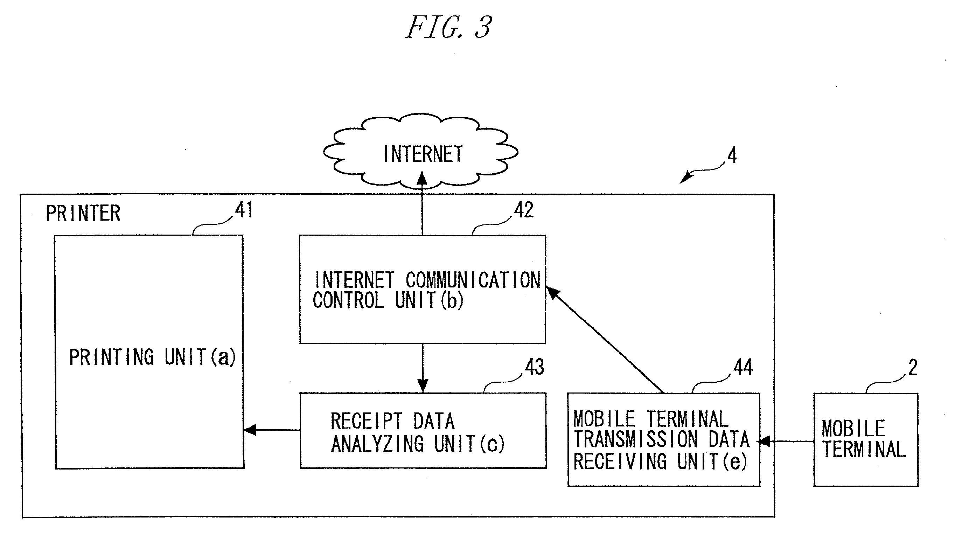

FIG. 3 is a block diagram showing functions of the printer 4. This printer 4 includes a print unit 41, an Internet communication control unit 42, a receipt data analyzing unit 43 and a mobile terminal transmission data receiving unit 44.

The mobile terminal transmission data receiving unit 44 performs communications with the mobile terminal 2 via, e.g., the mobile phone cable, the USB cable and the IEEE-1394 cable or through the wireless communications based on the Bluetooth standards etc. The mobile terminal transmission data receiving unit 44 receives the print go command from the mobile terminal 2 and transfers the same command to the Internet communication control unit 42.

The Internet communication control unit 42, upon receiving the print go command, communicates with the print reserve server 1 on the Internet and notifies that the holding status of the print data specified by the print go command is released. Then, the Internet communication control unit 42 receives the print data with its holding status released from the print reserve server 1. The Internet communication control unit 42 transfers the received print data to the receipt data analyzing unit 43.

The receipt data analyzing unit 43 analyzes the print data, controls the print unit 41 and executes printing in accordance with the analyzed print data. The receipt data analyzing unit 43 is, e.g., a CPU etc for executing an analysis program for analyzing a page description language. The embodiment of the present invention is not, however, limited to a structure of the receipt data analyzing unit 43. The receipt data analyzing unit 43 may be structured to construe print control data other than the page description language, such as an escape sequence depending on the hardware of the printer 4.

The print unit 41 executes printing on a sheet. According to this embodiment, there is no limit in type of the print unit 41, and various types, i.e., a laser beam type, an inkjet type, a thermosensible type can be utilized for the print unit 41.

### <Screen Layout and Data Structure>

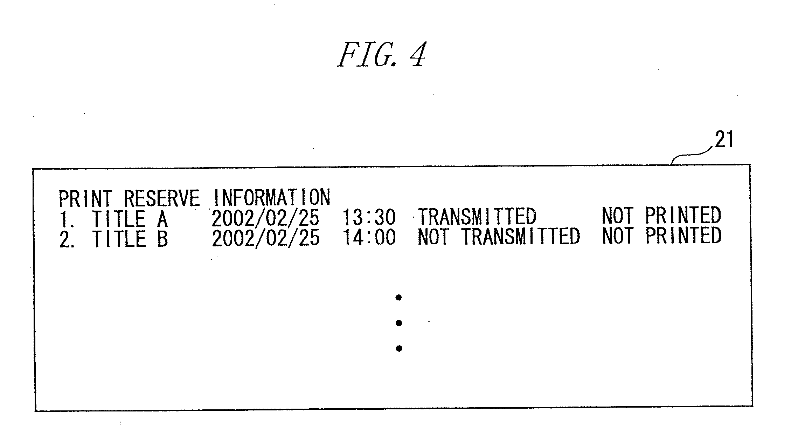

FIG. 4 shows an example of a screen of the mobile terminal 2, on which to display a list of title information with its print reserved (which is termed print reserve information). When the user transmits the print reserve command to the print reserve server 1 by pressing the [print reserve] button 22 on the mobile terminal 2, the mobile terminal 2 records an address of the title information in a way that adds the same address to the print reserve information.

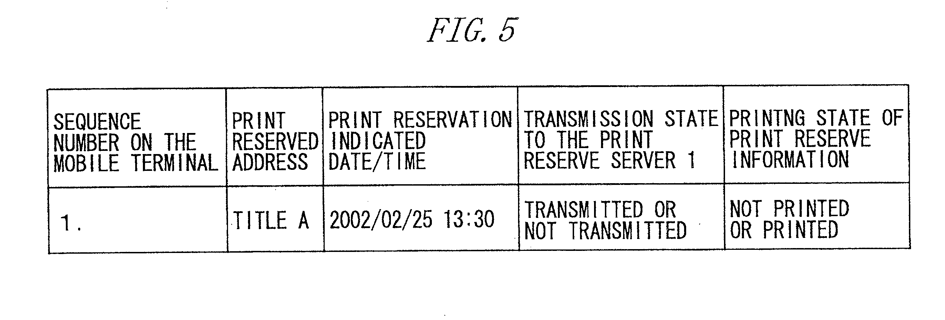

FIG. 5 shows a format example of the print reserve information. FIG. 5 shows the print reserve information for one piece of title information with its print reserved. As shown in FIG. 5, the print reserve information consists of pieces of data entered in a [sequence number on the mobile terminal] field, a 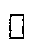 print reserved address 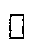 field, a [print reserve indicated date/time] field, a [transmission state to the print reserve server 1] field, and a [print state of print reserve information] field

The sequence number on the mobile terminal is a serial number for identifying an individual print reserve process (carried out by pressing the [print reserve] button 22) on each mobile terminal 2.

The print reserved address is an address of the title information (e.g., the content on the Internet) as a target of reservation for printing, i.e., as a print reserve target. The print reserve indicated date and time are date and a time when the print reserve command is transmitted by pressing the [print reserve] button 22 shown in FIG. 2.

The state of transmission to the print reserve server 1 is a piece of information for indicating whether the transmission of the print reserve command to the print reserve server 1 is completed by pressing the [print reserve] button 22. For example, [completed transmission] indicates that the transmission is completed, while [uncompleted transmission] indicates that the transmission is not yet completed.

The print state of the print reserve information indicates whether or not the print-reserved data are actually printed.

The screen example in FIG. 4 is that the list of the print reserved information described above is displayed on the display unit 21 of the mobile terminal 2.

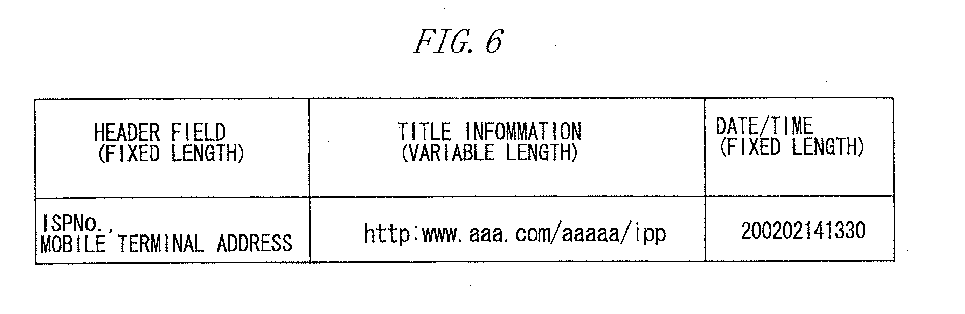

FIG. 6 shows an example of an information format (the print reserve command) transmitted to the print reserve server 1 from the mobile terminal 2. This print reserve command is transmitted to the print reserve server 1 when the user presses the [print reserve] button 22 on the mobile terminal 2.

As shown in FIG. 6, the print reserve command has a header field, a title information field and a date/time field. The header field is stored with ISPNO and a mobile terminal address. ISPNO is a piece of information for identifying the print reserve server 1. The ISPNo is, for example URL (Uniform Resource Locator) or an on-the-Internet IP address of the print reserve server 1.

The title information field is, as in the [print reserved address] field in FIG. 5, stored with an address of the title information (e.g., a content on the Internet) that becomes a target of reservation for printing, i.e., a print reserve target. This address is specified by, e.g., URL or the IP address on the Internet.

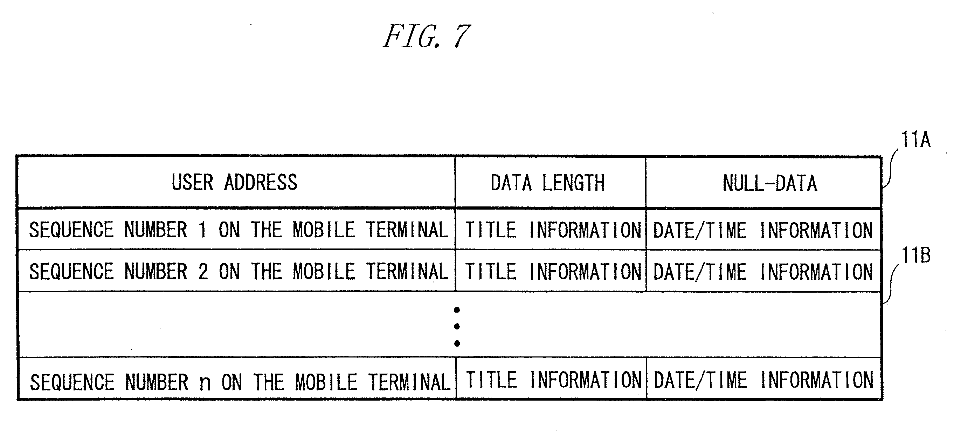

FIG. 7 shows a format example of the reserve database 11 in the print reserve server 1. FIG. 7 exemplifies a format for one user. This format is called print reserve data. This format is structured of reserve management fields 11A and reserve data 11B.

The reserve management fields 11A include a user address field and a data length field. The user address field is stored with data for uniquely identifying the user. According to this embodiment, the user address involves using an address of the user's own mobile terminal. The data length field is stored with a data size including the user address, a data length itself and the whole reserve data 11B.

The reserve data 11B contain a sequence number on the mobile terminal, the title information and date/time information. The sequence number on the mobile terminal is a serial number for identifying the print reservation by every user and coincides with the sequence number on the mobile terminal shown in FIG. 5. The user of each mobile terminal 2 is able to identify the print reservation transmitted by the user himself or herself, referring the user address and the sequence number on the mobile terminal.

The title information is the same as the title information of the print reserve command (see FIG. 6). Further, the date/time information is the same as the date/time information of the print reserve command (see FIG. 6).

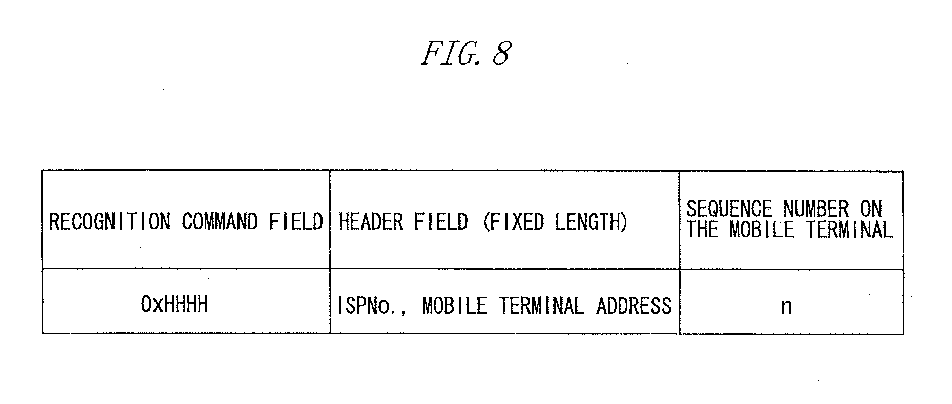

FIG. 8 shows a format example of transmission data (print go command) transmitted to the mobile terminal transmission data receiving unit 44 of the printer 4 from the mobile terminal 2. The user transmits the print go command to the printer 4 from on the mobile terminal 2, thereby conveying a user's intention to release the holding status of printing to the printer 4.

This print go command has a recognition command field, a header field and a ''sequence number on the mobile terminal'' field. The recognition command field is stored with information showing that this item of information is defined as the print go command.

The printer 4, when recognizing that a header of the data received from the mobile terminal 2 is data of the recognition command field, executes the printing process. Herein, the printing process is a process of releasing the holding status of printing, requesting the print reserve server 1 to send the print data, and printing the print data received.

The header field is the same as in the case of the print reserve command in FIG. 6. Further, the sequence number on the mobile terminal is the same as in the case of the format of the reserve database 11 shown in FIG. 7.

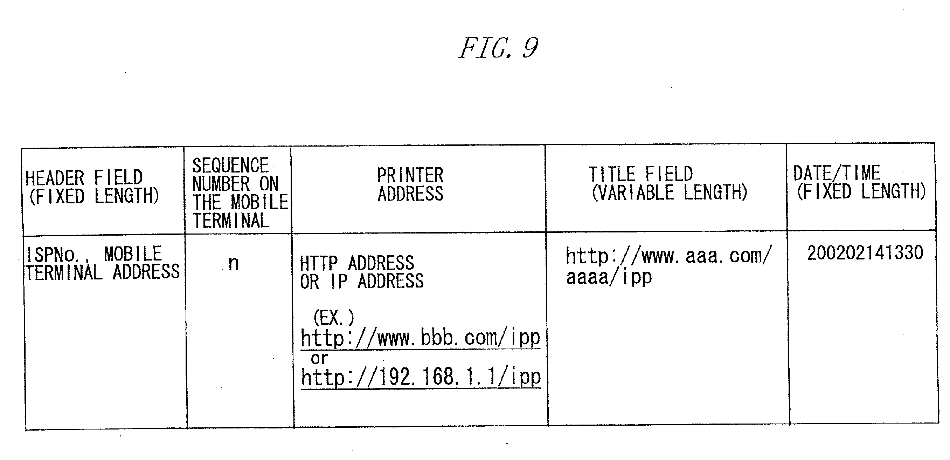

FIG. 9 shows a format example for transmitting data (a request for the print data) to the Internet from the communication control unit 42 of the printer 4. The printer 4, when receiving a print go command from the mobile terminal 2, transmits the data shown in FIG. 9 to the print reserve server 1. A release of the holding status of printing is thereby conveyed to the print reserve server 1 from the printer 4, and the print reserve server 1 is requested to send the print data back. Therefore, the data shown in FIG. 9 is called a request for the print data.

This print data request has a header field, a ''sequence number on the mobile terminal'' field, a printer address field, a title field and a date/time field. Among these fields, the printer address field is stored with URL or an IP address locating where the printer 4 making the request for the print data exists. Moreover, other items of information excluding the printer address are the same as those described in the reserve database 11 in FIG. 7.

Among those items of information, pieces of information entered in the header field, the "sequence number on the mobile terminal'' field and the printer address field, are indispensable. If the information in, e.g., the header field and the ''sequence number on the mobile terminal'' field are already known, however, the title information can be searched for in the print reserve server 1, and may therefore be omitted from the print data request. Further, the date and time may be omitted.

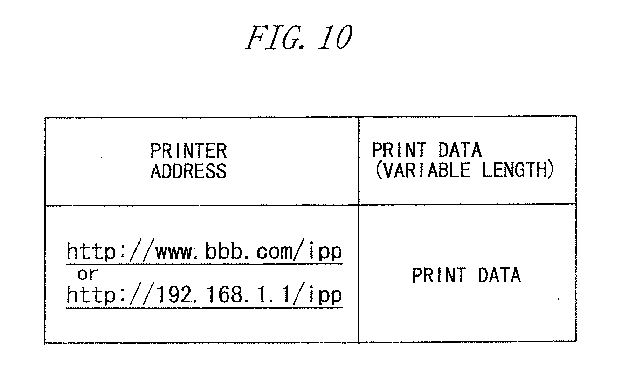

FIG. 10 shows a format example for transmitting the data to the printer 4 from the print reserve server 1. As shown in FIG. 10, the transmission data from the print reserve server 1 to the printer 4 contains a printer address and print data. The printer address is the same as the printer address shown in the print data request (see FIG. 9) and is defined as information for specifying the printer 4 making the request for the print data. The print data are retained on the print reserve database 11 and are defined as the data with the holding status of printing cancelled.

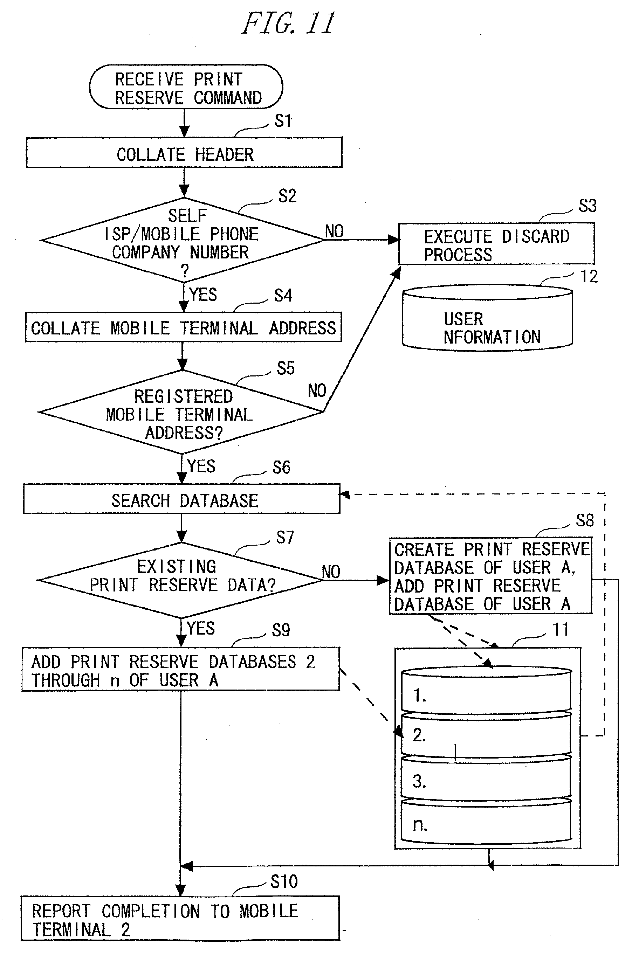

FIG. 11 shows a flow of a print reserve process starting with a receipt of the print reserve command from the mobile terminal 2 in the print reserve server 1 (that will hereinafter be simply called the server 1). This print reserve process is executed when the print reserve server 1 receives the print reserve command.

In this process, the server 1 collates the header (S1). The collation of the header is a process of comparing the header field of the print reserve command (see FIG. 6) with the information registered in the server 1.

Then, the server 1 judges whether or not ISPNO of the print reserve command is coincident with the information for specifying a self-company (which is an ISP or a mobile phone company) (S2). If ISPNO is not coincident with the information for specifying the self-company, the print reserve command thereof is not addressed to the self-company. Then, the server 1 discards the print reserve command and terminates the process (S3).

Whereas if it is judged in S2 that ISPNO is coincident with the information for specifying the self-company, the server 1 collates whether the mobile terminal address in the header is coincident with the address registered in the server 1 (S4). Note that the server 1 registers, in user information (database) 12, address of the mobile terminal of the user capable of transmitting the print reserve command according to the present information system.

If the mobile terminal address in the header is not coincident with the address registered in the server 1, the user having transmitted the print reserve command is not identified with the user formally registered. Then, the server 1 discards this print reserve command and terminates the process (S3).

Whereas if it is judged in S5 that the mobile terminal address in the header is coincident with the address registered in the server 1, the server 1 searches the database of the server 1 itself (S6). Then, it is judged whether the reserve database 11 of the user concerned is created or not (S7).

When judging that the reserve database 11 of the user concerned is not created, the server 1 creates the reserve database 11 of the user concerned. Then, the server 1 adds to the reserve database 11 the information (that is the print reserve data containing a content address etc) specified by the print reserve command received this time (S8). Thereafter, the server 1 proceeds to S10.

While on the other hand, when judging in S7 that the print reserve database 11 of the user concerned has already been created, the server 1 adds to the reserve database 11 the information (that is the print reserve data containing a content address etc) specified by the print reserve command received this time (S9). Next, the server 1 sends a report of completion to the mobile terminal 2, and terminates the process (S10).

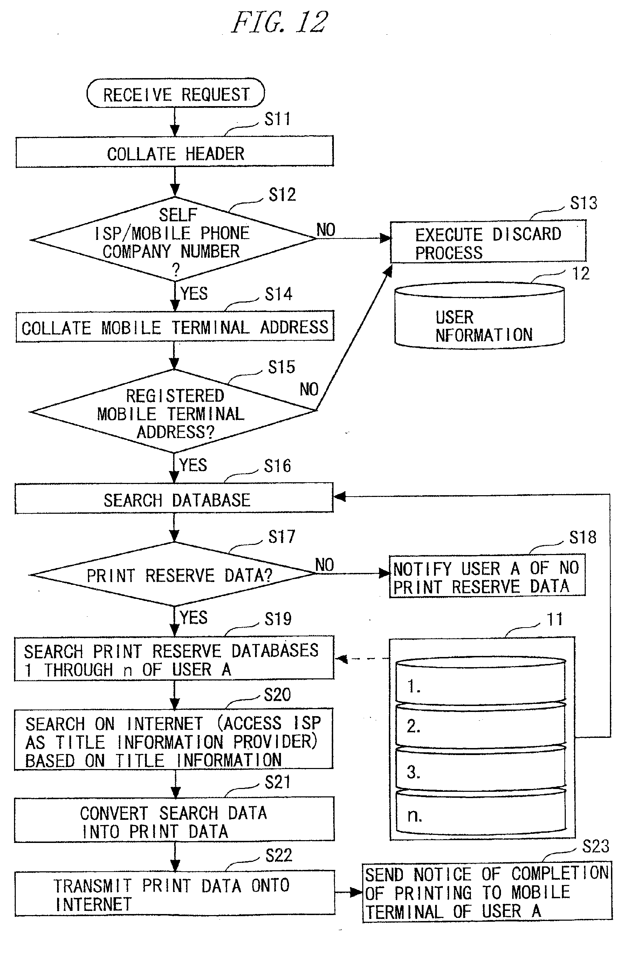

FIG. 12 shows a flow of a print data transmission process starting from a receipt of a request for the print data from the printer 4 in the print reserve server 1. This process starts when the server 1 receives the request (a release of the holding status of printing) for the print data from the printer 4. Steps S11 through S15 in this process are the same as S1 through S5 in FIG. 11 except that the transmission source is not the mobile terminal 2 but the printer 4, and therefore the repetitive explanations thereof are omitted.

When judging in S15 that the mobile terminal address in the header is coincident with the address registered in the user information 12, the server 1 searches the self-database (S16). Then, the server 1 judges whether there exist the print reserve data of the user (specified by the mobile terminal address) (S17). The print reserve data are data stored in the reserve database 11 and indicating the print reservation.

If the print reserve data of the specified user do not exist, the server 1 sends to the printer 4 a message purporting that the print reserve data do not exist (S18) and terminates the process. This message is stored as history information (unillustrated) of the printer 4 and displayed when the user's mobile terminal 2 accesses the printer 4.

While on the other hand, when judging in S17 that the print reserve data of the user concerned exist, the server 1 refers to data (1 through n) in the print reserve database 11(S19). Then, the server 1, based on the sequence number on the mobile terminal 2, searches for the title information mapping to this sequence number. Then, the server 1, based on the title information, accesses the Internet and searches for the print target information (S20).

Next, the server 1 converts the print target information searched for into the print data (S21). Subsequently, the server 1 transmits the print data (see FIG. 10) to the printer 4 on the Internet (S22). Thereafter, the server 1 notifies the mobile terminal 2 of a completion of printing (S23).

As discussed above, according to the present information system, the want-to-print information can be reserved for printing anytime and anywhere without installing a large-capacity memory into the mobile terminal 2 and without taking into consideration a data size of the information on the Internet. Then, the mobile terminal 2 is connected to the printer 4 at the convenience store near to the user or the office to which the user goes on the business trip, or the user accesses the printer 4 from on the mobile terminal 2, whereby the want-to-print information can be printed.

### <Modified Example>

In the embodiment discussed above, the information system is configured by connecting the mobile terminal 2, the print reserve server 1 and the printer 4 to each other via the Internet. The embodiment of the present invention is not limited to this architecture. For example, the print reserved data may be specified by an information device other than the mobile terminal 2. Such an information device is, it can be considered, for instance, a set-top box of a cable TV, a tuner for receiving satellite broadcasts and so on. The user is able to access various categories of contents and display the content on, e.g., a TV monitor by use of those information devices. At the present, however, there are provided none of those devices easily printing the content described above.

Such being the case, as in the embodiment discussed above, an operation unit (e.g., a remote controller etc) of the set-top box, the tuner etc is provided with the [print reserve] button 22 and the [print go] button 23, and the print reserve server 1 may be made to retain the print data via a cable TV network or a telephone line etc.

In this case, the address of the user's own mobile terminal 2 may be used directly as the mobile terminal address shown in FIG. 6. Such an address may be registered beforehand by use of the operation unit like the set-top box, the tuner etc. The set-top box, the tuner etc may stored the address in the print reserve command and may thus transmit it to the print reserve server 1.

According to this scheme, the user goes to the nearby shop while carrying the mobile terminal 2 and connects the mobile terminal 2 to the printer 4 at the shop, whereby the user can be authenticated as the user who reserved the print and the printing can be simply performed.

Further, the user (the sender of the print reserver command) may be identified by use of a subscriber number of a cable TV or satellite broadcasting etc as a substitute for the mobile terminal address shown in FIG. 6. In this case, the subscriber number of the cable TV or the satellite broadcasting etc may be registered within, e.g., the mobile terminal 2.

With this scheme, the user goes to the nearby shop while carrying the mobile terminal 2 and connects the mobile terminal 2 to the printer 4 at the shop, whereby the user can be authenticated as the user of the data of which the print was reserved and the printing can be simply executed.

Moreover, the [print reserve] button 22 or the [print go] button 23 is not required to be a physical button incorporated into the mobile terminal 2, the remote controller etc, and may be an object displayed on the display unit 21 shown in FIG. 2 or on an unillustrated TV monitor.

According to the embodiment discussed above, the print reserve server 1, when releasing the holding status of the printing data (the title information of the print target), searches for the title information and converts the same information into the print data that can be inputted to the printer 4 (refer to S20, S21 in FIG. 12).

The embodiment of the present invention is not, however, limited to these steps. For instance, the print reserve server 1, when receiving the print request from the mobile terminal 2, searches for the title information of the print target and may create the print data. Namely, the reserve database 11 may be stored with the print data that can be inputted to the printing device. This structure, though there increases the data size required by the print reserve server 11, enables a completion time up to the print completion to be decreased after the user has sent the print go command from on the mobile terminal 2.

### <<Storage medium Readable by Computer and Other Devices and Machines>>

A program read by a computer and other devices and machines to actualize one of the functions described above may be recorded on a storage medium readable by the computer and so on. Then, the computer etc reads and executes the program on this storage medium, thereby providing this function.

Herein, the storage medium readable by the computer etc includes storage mediums capable of storing information such as data, programs, etc. electrically, magnetically, optically and mechanically or by chemical action, which can be all read by the computer etc. What is demountable out of the computer etc among those storage mediums may be, e.g., a floppy disk, a magneto-optic disk, a CD-ROM, a CD-R/W, a DVD, a DAT, an 8mm tape, a memory card, etc.

Further, a hard disk, a ROM (Read Only Memory) and so on are classified as fixed type storage mediums within the computer.

### <<Data Communication Signal Embodied in Carrier Wave>>

Furthermore, the above program may be stored in a hard disk and a memory of each of the computer and other devices and machines, and downloaded to other computers via communication media. In this case, the program is transmitted as data communication signals embodied in carrier waves via the communication media. Then, the computer etc downloaded with this program can be made to provide the above function.

Herein, the communication media may be any one of cable communication mediums such as metallic cables including a coaxial cable and a twisted pair cable, optical communication cables, or wireless communication media such as satellite communications, ground wave wireless communications, etc.

Further, the carrier waves are electromagnetic waves for modulating the data communication signals, or the light. The carrier waves may, however, be DC signals. In this case, the data communication signal takes a base band waveform with no carrier wave. Accordingly, the data communication signal embodied in the carrier wave may be any one of a modulated broadband signal and an unmodulated base band signal (corresponding to a case of setting a DC signal having a voltage of 0 as a carrier wave).

## Claims

1. An information system comprising:
a user device; and
a server,
said user device including:
a unit accepting a print request of print target information; and
a unit transmitting a print command of the print target information to said server on a network,
said server including:
a unit receiving the print command of the print target information;
a holding unit holding the print command;
a print data creation unit converting the print target information into a format possible of inputting to a printing device and thus creating print data; and
a unit transferring the print data to said printing device when the holding status of the print command is released.

2. An information system according to claim 1, wherein said print data creation unit creates the print data when the holding status of the print command is released.

3. An information system according to claim 1 or 2, wherein said user device further includes a unit releasing the holding status of the print command.

4. An information system according to any preceding claim, further comprising a printing device connected to said server on the network,
wherein said user device further includes a unit commanding said server to release the holding status of the print command via said printing device, and
said printing device receives from said server the print data after releasing the holding status of the print command and prints the print data.

5. A user device comprising:
a unit accepting a print request of print target information;
a unit sending a print command of the print target information to a server on a network, and having the print command held by said server; and
a unit giving a command of releasing the holding status of the print command through a printing device connected to said server via the network, and having the print target information printed by said printing device.

6. A server comprising:
a unit receiving a print command of print target information;
a holding unit holding the print command;
a unit converting the print target information into a format possible of inputting to a printing device and thus creating print data; and
a unit transferring the print data to said printing device when the holding status of the print command is released.

7. A server according to claim 6, wherein said print data creation unit creates the print data when the holding status of the print command is released.

8. A printing method comprising:
accepting a print request of print target information at a first computer; and
sending a print command of the print target information to a second computer on a network,
wherein said second computer executes accepting the print command of the print target information, reserving the print command, creating print data in a way that converts the print target information into a format possible of inputting to a printing device, and transferring the print data to a printing device when the holding status of the print command is released.

9. A printing method according to claim 8, wherein said second computer executes creating the print data when the holding status of the print command is released.

10. A printing method according to claim 8 or 9, wherein said first computer further executes releasing the holding status of the print command of said second computer.

11. A printing method according to any one of claims 8 to 10, wherein said second computer is connected to said printing device via the network,
said first computer further executes commanding said second computer to release the holding status of the print command through said printing device, and
said printing device receives from said second computer the print data with its reservation cancellation commanded and prints the print data.

12. A printing method comprising:
accepting a print request of print target information;
sending a print command of the print target information to a server on a network, and having the print command held by said server; and
giving a command of releasing the holding status of the print command of said server via a printing device connected to said server on a network, and having the print target information printed by said printing device.

13. A printing method comprising;
accepting a print command of print target information;
holding the print command;
converting the print target information into a format possible of inputting to a printing device, and thus creating print data; and
transferring the print data to said printing device when the holding status of the print command is released.

14. A printing method according to claim 13, wherein the creation of the print data is started when the holding status of the print command is released.

15. A program making a first computer execute;
receiving a print request of print target information; and
transmitting a print command of the print target information to a second computer on a network,
said program further making said second computer execute;
receiving the print command of the print target information;
holding the print command;
converting the print target information into a format possible of inputting to a printing device, and thus creating print data; and
transferring the print data to said printing device when the holding status of the print command is released.

16. A program according to claim 15, wherein said second computer is made to execute creating the print data when the holding status of the print command is released.

17. A program according to claim 15 or 16, wherein said first computer is made to further execute releasing the holding status of the print command.

18. A program according to any one of claims 15 to 17, wherein said second computer is connected to a printing device via a network,
said first computer is made to further execute commanding said second computer to release the holding status of the print command through said printing device, and
said printing device is made to receive from said second computer the print data after releasing the holding status of the print command and to print the print data.

19. A program making a computer execute:
accepting a print request of print target information;
sending a print command of the print target information to a server on a network, and having the print command held by said server; and
giving a command of releasing the holding status of the print command through aprinting device connected to said server via the network, and having the print target information printed by said printing device.

20. A program making a computer execute:
receiving a print command of print target information;
holding the print command;
converting the print target information into a format possible of inputting to a printing device, and thus creating print data; and
transferring the print data to said printing device when the holding status of the print command is released.

21. A program according to claim 20, wherein the creation of the print data is started when the holding status of the print command is released.
